# EUROPEAN PATENT APPLICATION

(11) **EP 4 748 710 A1**
(43) Date of publication of application: **27.05.2026**
(21) Application number: 24425056.9
(22) Date of filing: 26.11.2024
(51) Int. Cl.: B64C 27/26, B64C 27/28, B64C 29/00

(54) **HALF-WING FOR A CONVERTIBLE AIRCRAFT CAPABLE OF HOVERING**

(71) Applicant: Leonardo S.p.a., 00195 Roma (IT)
(72) Inventor: Bianco Mengotti, Riccardo, 21017 Samarate (VA) (IT); Cavanna, Mattia, 21017 Samarate (VA) (IT); Sampugnaro, Luca, 21017 Samarate (VA) (IT); Caccetta, Luca, 21017 Samarate (VA) (IT); Landi, Francesco, 21017 Samarate (VA) (IT); Frassoldati, Gregorio, 21017 Samarate (VA) (IT)
(74) Representative: Studio Torta S.p.A.

(57) **Abstract**

A half-wing (3, 3', 3", 3‴; 8; 9) for a convertible aircraft (1) capable of hovering is described, comprising: a first portion (50) that can be attached to a fuselage (2) of the aircraft (1); a second portion (51) that can be tilted with respect to the first portion (50) around a first axis (H; I; J); a first rotor (20a, 20b; 21a, 21b; 22a, 22b) integral with the second portion (51) and revolving about a second axis (B, C; D, E; F, G) transverse to the first axis (H; L; J); the second portion (51) being tiltable with respect to the first portion (50) by a first angle (α) between a first and a second position associated, respectively, with a first forward flight configuration and a second take-off/landing configuration of the aircraft (1); the half-wing (3, 3', 3", 3‴; 8, 9) comprises a wing area (60) defining a free wing tip (52) of the half-wing (3) and operationally connected to the second portion (51); each first rotor (20a, 20b; 21a, 21b; 22a, 22b) is interposed between the first wing area (60) and the first portion (50) along the first axis (H; L; J).

## Description

This invention relates to a half-wing for a convertible aircraft capable of hovering.

In the aviation sector, airplanes are normally used for high cruising speeds, in particular greater than 150 knots and high altitudes, e.g. over 30,000 feet. At high cruising speeds and altitudes, airplanes employ fixed wings to generate the lift necessary to support the aircraft. Sufficient lift can only be achieved by accelerating the airplane on runways of considerable length. These runways are also necessary to allow the airplanes to land.

In contrast, helicopters normally have lower cruising speeds than airplanes and generate the lift required for support through the rotation of the main rotor blades. As a result, helicopters can land/take off without the need for horizontal speed and using very small surfaces. Moreover, helicopters are capable of hover flying at relatively low altitudes and speeds, making them particularly easy to handle and suitable for demanding manoeuvres such as recovering people in the mountains or at sea.

Nevertheless, helicopters have inherent limitations regarding the maximum operating altitude, which is around 20,000 feet, and the maximum operating speed, which cannot exceed 150 knots.

In order to meet the demand for aircraft capable of the same manoeuvrability and flexibility of use as the helicopter while overcoming the inherent limitations mentioned above, convertiplanes are known, which are a type of convertible aircraft.

An example of a convertiplane is described in patent application US-B-10,011,349.

More specifically, the convertiplane described in the above-mentioned patent essentially comprises:
- a fuselage extending along a first longitudinal axis; and
- a wing extending cantilevered and consisting of a pair of half-wings arranged on respective sides of the fuselage opposite each other and having respective free wing tips opposite the fuselage and aligned along a second transverse axis substantially orthogonal to the first longitudinal axis.

The convertiplane also comprises:
- a pair of nacelles housing the respective engines; and
- a pair of rotors rotatable around respective third axes and operatively connected to respective engines.

The rotors can be tilted with respect to the wing around a fourth axis preferably parallel to the second axis.

Convertiplanes are also able to selectively take:
- a first "airplane" configuration, in which the rotors are arranged with their respective third axes substantially parallel to the first axis of the convertiplane and coaxial to their respective engines; and
- a second "helicopter" configuration, in which the rotors are arranged with their respective third axes substantially vertical and orthogonal to the convertiplane's first axis and orthogonal to their respective engines.

Several proposals for electrically powered convertible aircraft have recently been developed.

Such electrically powered convertible aircraft include, in a nutshell:
- a plurality of wing areas;
- a plurality of mutually independent electric motors driving respective rotors tilted with respect to the fuselage to determine the transition between the "airplane" and "helicopter" configurations;
- a plurality of control surfaces supported by the wing areas; and
- a plurality of first actuators that can be operated to move the control surfaces relative to corresponding wing areas and thus ensure the manoeuvrability of the aircraft in the "airplane" configuration.

Electrically powered convertible aircraft are also known that comprise, in addition:
- a pair of tail fins projecting so as to form a V from a tail end of the fuselage; and
- a plurality of movable surfaces supported by the tail fins; and
- a plurality of second actuators that can be operated to move respective movable surfaces relative to corresponding tail fins and thus ensure the manoeuvrability of the aircraft in the first "airplane" configuration.

There is a perceived need in the industry to reduce the number of components of convertible aircraft capable of hovering, while ensuring complete and effective manoeuvrability in all flight conditions.

There is also a perceived need to ensure the manoeuvrability of the aircraft even in the event of rotor failure.

There is also a perceived need to reduce the operational loads on the first and second actuators.

Finally, there is a perceived need to reduce the interference between the airflow generated by the rotors downward and the half-wings when the aircraft is in the second "helicopter" configuration and during the transition between the second "helicopter" configuration and the first "airplane" configuration.

The purpose of this invention is to provide a half-wing for a convertible aircraft capable of hovering, which enables at least one of the above requirements to be met in a simple and economical manner.

According to the invention, this purpose is achieved with a half-wing for a convertible aircraft capable of hovering as claimed in claim 1.

To better understand this invention, four preferred, but non-limiting, embodiments of this invention are described below, merely by way of example, and with the aid of the attached figures in which:
- Figure 1 is a perspective view of a convertible aircraft comprising a first embodiment of a half-wing produced according to the precepts of this invention;
- Figures 2 to 4 illustrate in perspective view and on a greatly enlarged scale the half-wing in Figure 1 in respective operating configurations;
- Figure 5 illustrates in perspective view first details of the half-wing in Figures 1 to 4;
- Figures 6 to 9 illustrate successive operating positions of a second embodiment of a half-wing produced according to the precepts of this invention, in side view and with parts removed for clarity;
- Figure 10 is a perspective view of a third embodiment of a half-wing for a convertible aircraft produced according to the precepts of this invention; and
- Figure 11 is a perspective view of a fourth embodiment

of a half-wing for a convertible aircraft produced according to the precepts of this invention.

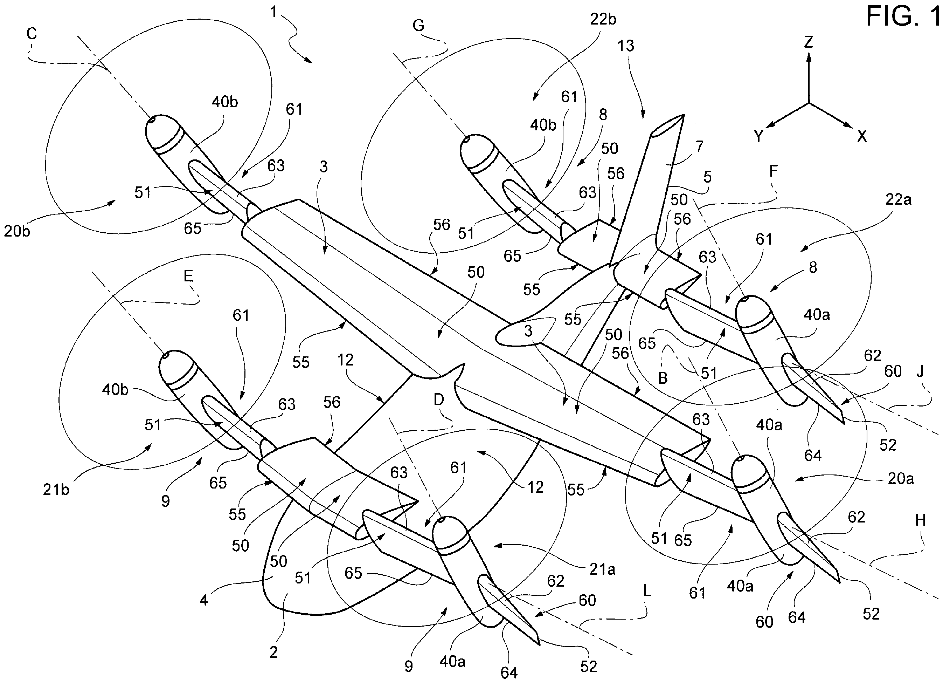

With reference to Figure 1, reference number 1 indicates a convertible aircraft capable of hovering.

More specifically, the aircraft 1 can be selectively switched between:
- a first "airplane" configuration, in which it is in a forward flight condition and proceeds along a predominantly horizontal trajectory; and
- a first "helicopter" configuration, in which it performs a hover manoeuvre or advances along a predominantly vertical trajectory.

It should be specified that, below in this description, expressions such as "above", "below", "in front of", "behind" and the like are used with reference to normal conditions of forward flight or "hovering" of the aircraft 1 illustrated in Figure 1.

It is possible to identify a set of three axes integral with the aircraft 1 and originating at a centre of gravity of the aircraft 1 itself consisting of:
- a longitudinal axis Y of the aircraft 1;
- an axis X orthogonal to the axis Y; and
   an axis Z orthogonal to the axes X, Y.

The aircraft 1 essentially comprises:
- a fuselage 2 extending along the axis Y and defining a nose 4 and a tail 5 of the aircraft 1; and
- a portion of the tail 13 projecting cantilevered from the tail 5 of the fuselage 2 transversely to it.

In the illustrated embodiment, the aircraft 1 also comprises:
- a pair of half-wings 3 extending cantilevered from their respective opposite sides 12 of the fuselage 2 and transverse to the axis Y, having respective free wing tips 52, and capable of generating an initial lift to ensure the support of the aircraft 1 in the first "airplane" configuration; and
- a pair of half-wings 9 of the "canard" type projecting cantilevered from respective sides 12 at the nose 4 of the fuselage 2, having respective free wing tips 52, and capable of generating a second lift/negative lift value to provide the desired degree of longitudinal stability to the aircraft 1 in the second "helicopter" configuration.

The tail 6 portion is preferably shaped like a cross and includes, in turn:
- a tail fin 7 included to provide lateral stability to the aircraft 1 in the second "helicopter" configuration; and
- a pair of half-wings 8 projecting cantilevered from respective opposite sides of the tail fin 7, comprising respective free wing tips 52, and capable of generating a second lift/negative lift value to provide a desired degree of longitudinal stability to the aircraft 1 in the second "helicopter" configuration.

In particular, the wingspan, i.e. the distance between the free wing tips 52 and the respective side 12 according to a corresponding longitudinal extension direction of the half-wing 3 is greater than the wingspan of the half-wing 8. The wingspan of the half-wing 8 is, in turn, greater than the wingspan of half-wing 9.

With reference to normal forward flight operating conditions, the aircraft 1 proceeds in a direction oriented from the tail 5 to the nose 4.

The half-wings 3 and 8 extend above the fuselage 2.

The half-wings 3 are interposed along the axis Y between the nose 4 and tail 5.

The aircraft 1 also comprises, in the case illustrated:
- a pair of rotors 20a, 20b supported by their respective half-wings 3 in a rotating manner around their respective axes B, C which can be tilted with respect to the fuselage 2;
- a pair of rotors 21a, 21b supported by their respective half-wings 9 in a rotating manner around their respective axes D, E, which can be tilted with respect to the fuselage 2; and
- a pair of rotors 22a, 22b supported by respective, additional half-wings 8 in a rotating manner around their respective axes F, G and which can be tilted with respect to the fuselage 2.

In particular, the axes B, C; D, E; and F, G can be tilted with respect to the fuselage 2 about respective axes H; L; J between respective first positions assumed when the aircraft 1 is in the first "airplane" configuration and respective second positions assumed when the aircraft 1 is in the second "helicopter" configuration.

The axes H; L; J are essentially parallel to the axis X.

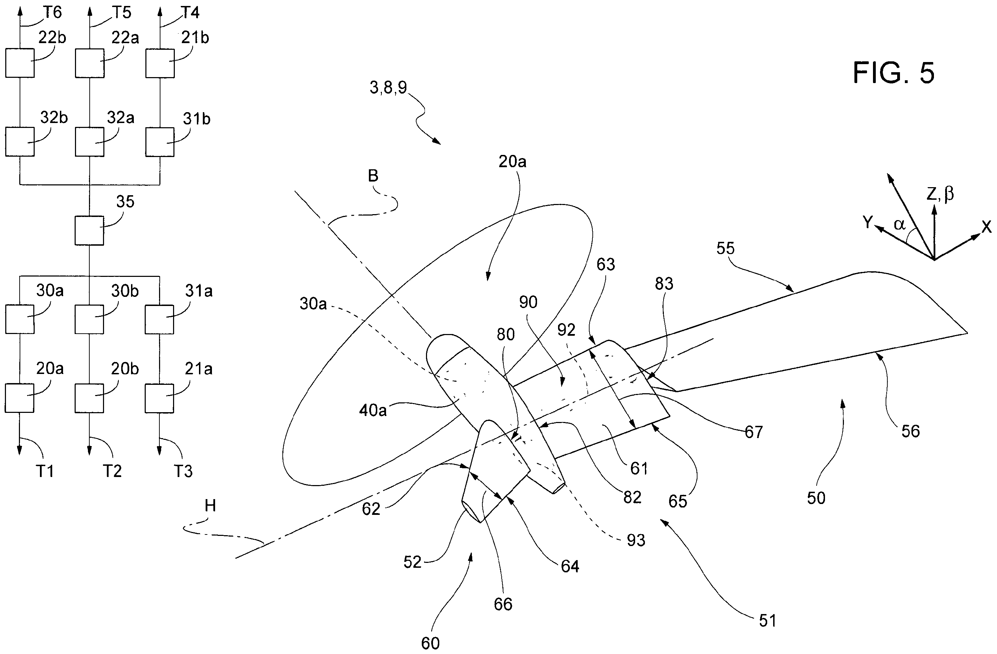

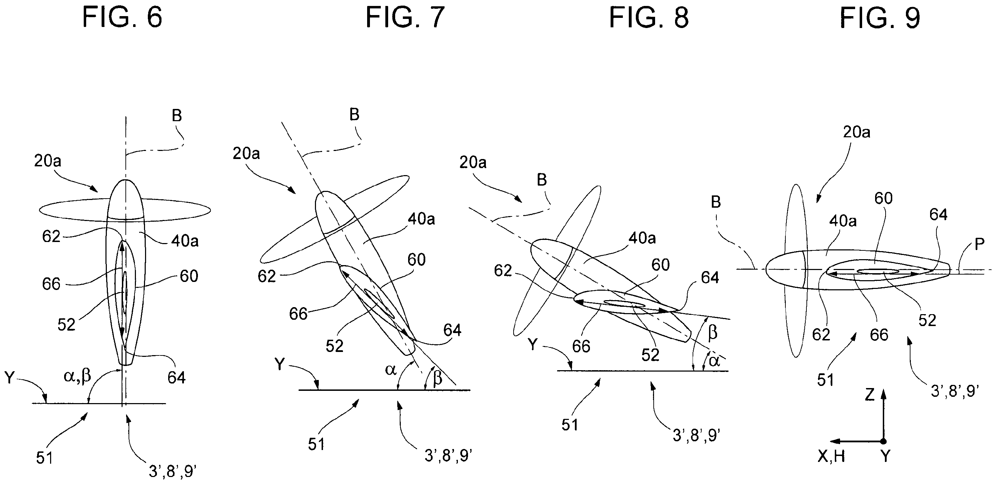

The aircraft 1 also comprises:
- a plurality of motors 30a, 30b; 31a, 31b; 32a, 32b (only one of which is illustrated in Figure 6) operationally connected to respective rotors 20a, 20b; 21a, 21b; 22a, 22b and can be operated to rotate said rotors 20a, 20b; 21a, 21b; 22a, 22b around respective axes B, C; D, E; and F, G;
- a control unit 35 (only schematically illustrated in Figure 5) receiving as input a plurality of control signals provided by the crew, an autopilot or a remote control system, and programmed to provide as output a plurality of commands to control the motors 20a, 20b; 21a, 21b; 22a, 22b, so that the respective rotors 30a, 30b; 31a, 31b; 32a, 32b provide desired values of the relative thrusts T1, T2; T3, T4; T5, T6; and
- a plurality of nacelles 40a, 40b housing respective motors 30a, 30b; 31a, 31b; 32a, 32b and supporting corresponding rotors 20a, 20b; 21a, 21b; 22a, 22b.

More specifically, the control unit 35 is programmed to command the rotors 20a, 20b; 21a, 21b; 22a, 22b to generate respective, independent thrusts T1, T2; T3, T4; T5, T6.

More specifically, the control unit 35 is programmed to command the rotors 20a, 20b; 21a, 21b; 22a, 22b to generate respective thrusts T1, T2; T3, T4; T5, T6 having a resultant parallel to the axis Z when the aircraft 1 is in the first "airplane" configuration and having a resultant parallel to the axis Y when the aircraft 1 is in the second "helicopter" configuration.

The axes B, C; D, E and F, G are arranged symmetrically to the axis Y.

In the example illustrated, the motors 30a, 30b; 31a, 31b; 32a, 32b are electrically driven.

The rotors 20a, 20b; 21a, 21b; 22a, 22b have a variable pitch.

Alternatively, the motors 30a, 30b; 31a, 31b; 32a, 32b regulate the thrusts T1, T2; T3, T4; T5, T6 by acting only on the angular speed of the rotors 20a, 20b; 21a, 21b; 22a, 22b around the corresponding axes B, C; D, E; F, G.

Each half-wing 3; 8; 9 essentially comprises:
- a respective root portion 50 attached to the respective side 12 of the fuselage 2; and
- a respective wing tip portion 51 that can be tilted with respect to the root portion 50 about the axis H; J, L and defining the respective free wing tip 52 of the half-wing 3 opposite the fuselage 2.

The rotors 20a, 20b; 22a, 22b; 21a, 21b are supported by respective wing tip portions 51 of corresponding half-wings 3; 8; 9 and revolve together with them about the axis H; J, L with respect to the corresponding root portion 50.

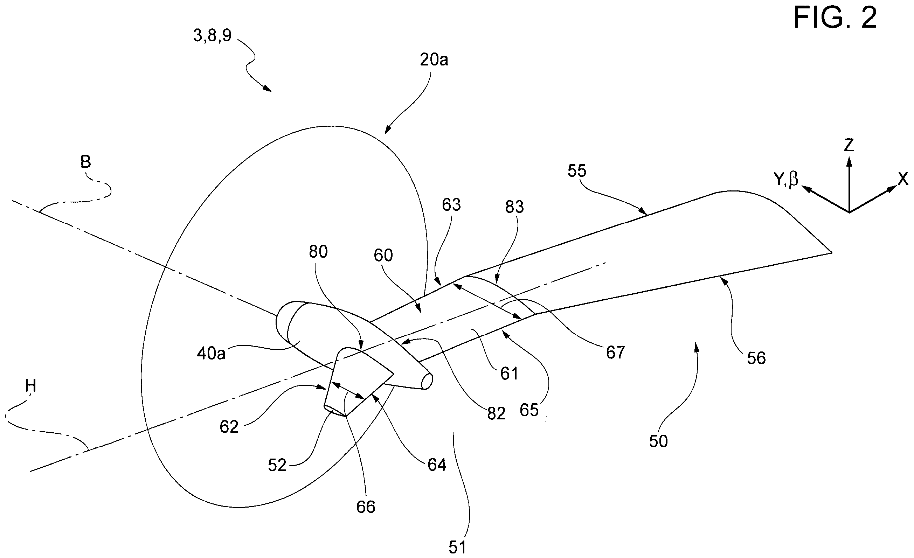

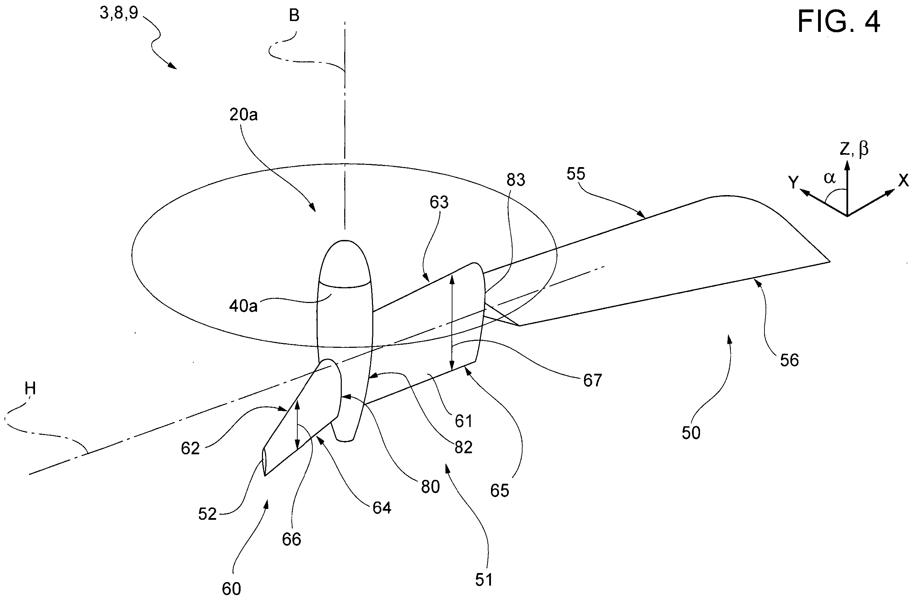

Each wing tip portion 51 revolves about the axis H; J; L with respect to the corresponding root portion 50 by an angle α of between ninety and one hundred and twenty degrees between:
- a first position assumed (Figure 2) when the aircraft 1 is in the first "airplane" configuration and in which the axes B, C; D, E; F, G of the respective rotors 20a, 20b; 21a, 21b; 22a, 22b are substantially parallel to the axis Y; and
- a second position (Figure 4) assumed when the aircraft 1 is in the second "helicopter" configuration and in which the axes B, C; D, E; F, G of the respective rotors 20a, 20b; 21a, 21b; 22a, 22b are parallel to the axis Z.

Advantageously, each half-wing 3; 8; 9 comprises a wing area 60 defining the end 52 of the half-wing 3; 8; 9 itself and operationally connected to the end portion 51; each rotor 20a, 20b; 21a, 21b; 22a, 22b is interposed between the corresponding wing area 60 and the relative root portion 50 along the corresponding axis H; L; J.

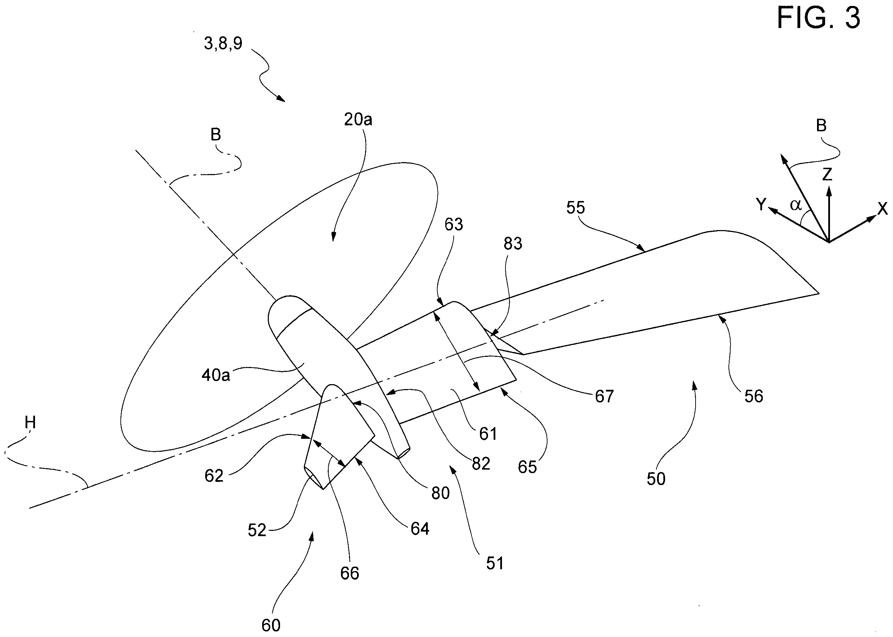

More specifically, the wing tip portion 51 of each half-wing 3; 8; 9 can be tilted with respect to the corresponding portion about the axis H; J, L, so as to be able to assume a plurality of third positions (one of which is illustrated in Figure 3) associated with respective values of an aerodynamic control force generated by the wing area 60, when the aircraft 1 is in the second "helicopter" configuration.

In each of these third positions, an angle α defined between the axis B, C; D, E; F, G of the corresponding rotor 20a, 20b; 21a, 21b; 22a, 22b and a direction parallel to the axis Y assumes a respective value between minus twenty and one hundred and ten degrees.

Each wing area 60 defines the respective wing tip 52 of the corresponding half-wing 3.

Each wing tip portion 51 further comprises an additional wing area 61, which contributes to generating an aerodynamic control force on the aircraft 1 arranged in the first "airplane" configuration.

Each nacelle 40a, 40b of the rotor 20a, 20b; 21a, 21b; 22a, 22b is interposed along the axis H; L; J between the wing areas 60, 61.

The root portion 50 of each half-wing 3; 8, 9 comprises, in turn:
- a leading edge 55; and
- a trailing edge 56.

Each wing area 60, 61 comprises, in turn:
- a corresponding leading edge 62, 63;
- a corresponding trailing edge 64, 65; and
- a corresponding chord 66, 67 extending between the respective leading edges 62, 63 and the corresponding trailing edges 64, 65.

The wing area 60 of each half-wing 3, 8, 9 also includes (Figures 2 to 4):
- a wing tip 80 extending between the leading edge 62 and the trailing edge 64 and lying on the side of the root portion 50; and
- the free wing tip 52 extending between the leading edge 62 and the trailing edge 64, and opposite the wing tip 80.

Similarly, the wing area 61 of each half-wing 3, 8, 9 comprises:
- a wing tip 82 extending between the leading edge 63 and the trailing edge 65 and lying on the side of the wing area 60; and
- a wing tip 83 extending between the leading edge 63 and the trailing edge 65, opposite the wing tip 82 and lying on the side of the corresponding root portion 50.

Each nacelle 40a, 40b is interposed along the axis H; L; J between the wing tip 82 of the corresponding wing area 61 and the wing tip 80 of the corresponding wing area 60.

The chord 66 lengths of each wing area 60 progressively increase from a minimum value to a maximum value, proceeding from the corresponding wing tip 52 towards the corresponding wing tip 80.

The chord 67 lengths of the wing area 61 are greater than the maximum value of the chord 66 length of the wing area 60.

In particular, the leading edge 62 of the wing area 60 of each half-wing 3; 9; 8 extends partly in front of and partly behind the axis H; L; J in the first "airplane" configuration of the aircraft 1 (Figure 2).

The trailing edge 64 of the wing area 60 of each half-wing 3; 8; 9 extends completely behind the axis H J; L in the first "airplane" configuration of the aircraft 1.

The leading edges 63 and trailing edges 65 of the wing areas 61 define an extension of the leading edges 55 and trailing edges 56, respectively, of the corresponding half-wings 3; 8; 9 in the airplane configuration of aircraft 1, as illustrated in Figure 2.

The leading edge 62 of each wing area is tapered with respect to the axis Z proceeding from the respective wing tip 80 towards the corresponding wing tip 52, when the aircraft 1 is in the second "helicopter" configuration.

With particular reference to Figure 5, each half-wing 3; 8; 9 further comprises a handling device 90 that can be operated to tilt the wing tip portion 51 with respect to the root portion 50 about the axis H; J; L.

Specifically, each handling device 90 comprises (Figure 5) :
- a rod 92 extending along its corresponding axis H; L; J and extending between the root portion 50 and the wing tip portion 51; and
- an actuator 93 that can be operated to exert an axis H torque on the rod 92.

More specifically, the rod 92 is rotationally fixed with respect to the axis H; L; J and the actuator 93 is attached to the wing tip portion 51 of the corresponding half-wing 3; 8; 9.

Thus, the axis H; L; J torque exerted by each actuator 93 on the corresponding rod 92 fixed to the corresponding fixed wing tip portion 51 with respect to the axis H; L; J tilts the relative wing tip portion 51 about the axis H; L; J.

More specifically, the actuator 93 is positioned behind the axis H; L; J when the aircraft 1 is in the first "airplane" configuration and with reference to a normal forward direction of the aircraft 1.

In particular, the actuator 93 is attached to one end of the nacelle 40a, 40b axially opposite the corresponding rotor 20a, 20b; 21a, 21b; 22a, 22b.

The operation of the half-wing 3; 8, 9 is described below starting from a condition in which the aircraft 1 is in the first "airplane" configuration in which the axes B, C, D, E, F, G of the rotors 20a, 20b, 21a, 21b, 22b, 22c are parallel to the axis Y. The motors 30a, 30b, 31a, 31b, 32b, 32c independently drive the respective rotors 20a, 20b, 21a, 21b, 22b, 22c. The resultant of the respective thrusts T1, T2, T3, T4, T5, T6 is also parallel to the axis Y and causes the aircraft 1 to move forward at a speed sufficient to allow the half-wings 3 to generate lift along the axis Z directed upwards and sufficient to ensure the support of the aircraft 1 in flight.

The half-wings 8 and 9 generate respective lift/negative lift values directed along the axis Z, which ensure the longitudinal stability of the aircraft 1.

The rolling, pitching, and yawing manoeuvres - i.e. the rotations around the respective axes Y, X and Z - are obtained by appropriate tilting of one or more rotors 20a, 20b; 21a, 21b; 22b, 22c around the respective axes H; L; J by first independent angles.

More specifically, as a result of this tilting, the wing areas 60, 61 of the respective half-wings 3; 8 and 9 vary their angles of incidence with respect to the airstream and generate corresponding aerodynamic forces of a desired modulus and direction.

The resultant of these aerodynamic forces generates the desired direct torques around the axes X, Y, Z on the aircraft 1.

In particular, the tilting of the wing areas 60, 61 occurs via the respective actuator 93. The actuation of this actuator 93 causes the rotation of the corresponding wing tip portion 51 and the corresponding wing area 60 about the relative extension axis H; L; J of the fixed rod 92 and, consequently, the variation of the wing tip portions 51 and the corresponding wing areas 60, 61 by the angle α of inclination with respect to the corresponding root portions 50.

If it is necessary to put the aircraft 1 in the second "helicopter" configuration, for example in order to perform a landing manoeuvre, the actuators 62 are driven to tilt the wing tip portions 51 of the half-wings 3 and of the half-wings 8, 9 around the relative axes H, L, J until the axes B, C, D, E, F, G of the rotors 20a, 20b; 21a, 21b; 22b, 22c are positioned parallel to the axis Z. In this condition, the resultant of the thrusts T1, T2, T3, T4, T5, T6 generated by the rotors 20a, 20b, 21a, 21b, 22b, 22c is parallel to the axis Z and enables the support of the aircraft 1 in flight.

With reference to Figures 6 to 9, reference number 3', 8', 9' indicate a half-wing according to a second embodiment of the invention.

The half-wing 3', 8', 9' is similar to the half-wing 3, 8, 9 and will be described below only as far as it differs from the latter; the same or equivalent parts of the half-wings 3, 3'; 8, 8'; 9, 9' will be distinguished, where possible, by the same reference numbers.

In particular, the half-wing 3', 8', 9' differs from the half-wing 3, 8, 9 in that the wing area 60 is connected to the wing area 61 and to the nacelle 40a, 40b, so that the tilting of the wing area 60 (and of the nacelle 40a, 40b) by the angle α about the axis H; J; L tilts the wing area 61 about the same axis H; J; L by an angle β different from the angle α, in the example illustrated greater than the angle β.

In particular, each angle β is defined between a respective direction integral with the corresponding wing area 60 and a corresponding direction parallel to the axis Y.

Even more precisely, the angle β is defined between a direction defined by the chord 66 of the corresponding wing area 61 and the corresponding direction parallel to the axis Y.

More specifically, the actuator 93' differs from the actuator 93 in that it can be driven to simultaneously tilt the wing area 61 and the nacelle 40a, 40b by the angle α about the axis H; L; J, and to tilt the wing area 60 by the angle β, which is different to the angle α, about the axis H; L; J.

The actuator 93' is not described in detail because its detailed configuration is not necessary for the understanding of this invention.

The operation of the half-wing 3'; 8'; 9' differs from that of the half-wing 3; 8; 9 in that the respective actuator 93' can be controlled so as to arrange:
- the wing areas 60, 61 tilted by respective angles α, β equal to ninety degrees with respect to the axis H in the second "helicopter" configuration of the aircraft 1, so as to reduce the aerodynamic resistance offered to the blowing of the rotor 20a, 20b; 21a, 21b directed parallel to the axis Z and downwards (Figure 6);
- the wing area 60 tilted by an angle α less than the angle β of inclination of the area 61, during the transition of the aircraft 1 between the first "airplane" configuration and the second "helicopter" configuration, so as to reduce the overall aerodynamic resistance of the aircraft 1 (Figures 7 and 8); and
- the wing areas 60, 61 inclined by respective angles α, β equal to zero degrees in the first "airplane" configuration of the aircraft 1, so as to reduce the aerodynamic resistance of the aircraft 1 (Figure 9).

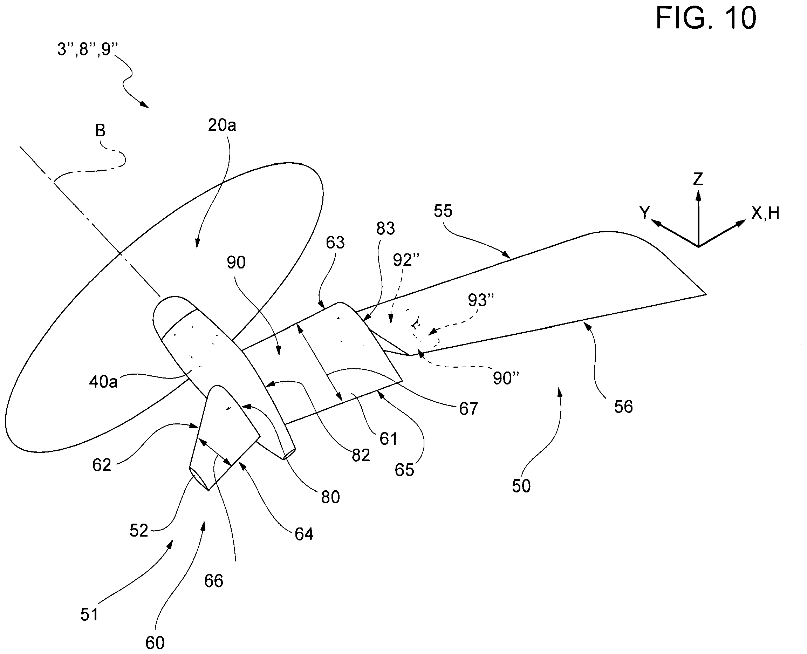

With reference to Figure 10, reference numbers 3", 8'', 9" indicate a half-wing according to a fourth embodiment of the invention.

The half-wing 3"; 8'', 9" is similar to the half-wing 3, 8, 9 and will be described below only as far as it differs from the latter; the same or equivalent parts of the half-wings 3, 3"; 8, 8"; 9, 9" will be distinguished, where possible, by the same reference numbers.

In particular, the half-wing 3'', 8'', 9'' differs from the half-wing 3, 8, 9 in that the rod 92'' of each handling device 90'' revolves about the relative axis H; L, J and the actuator 93'' is attached to the root portion 50 of the corresponding half-wing 3, in particular at the trailing edge 56.

The operation of the half-wing 3'', 8'', 9'' differs from that of the half-wing 3, 8, 9 in that the axis H; L; J torque exerted by each actuator 93'' results in a rotation about the axis H; L; J of the rod 92''. This rotation of the rod 92‴ determines, in turn, the inclination of the wing tip portion 51 and, therefore, of the relative rotor 20a, 20b and the wing areas 61 about the axis H; L; J.

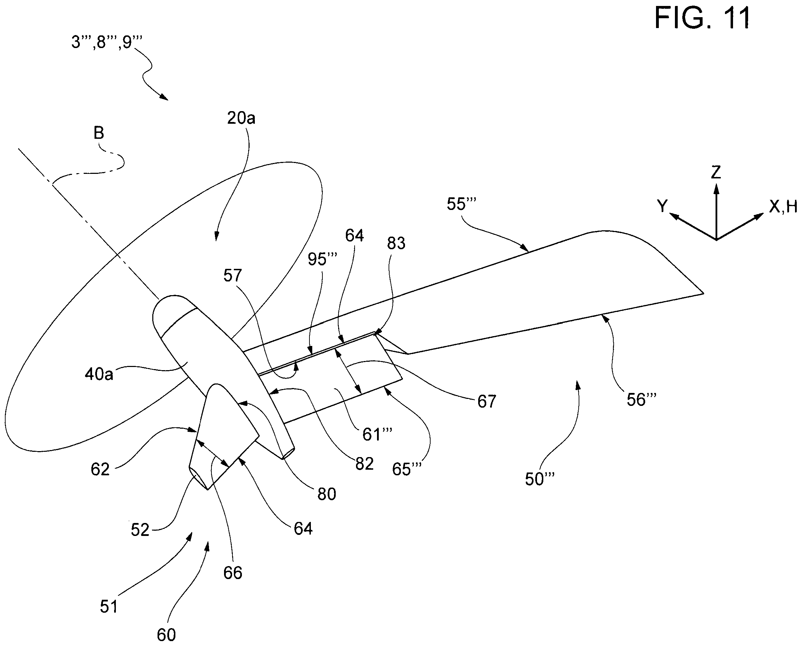

With reference to Figure 11, reference numbers 3‴, 8‴, 9‴ indicate a half-wing according to a fourth embodiment of the invention.

The half-wing 3‴, 8‴, 9‴ is similar to the half-wing 3 and will be described below only as far as it differs from the latter; the same or equivalent parts of the half-wings 3, 3‴; 8, 8‴; 9, 9‴ will be distinguished, where possible, by the same reference numbers.

In particular, the half-wing 3‴, 8‴, 9''' differs from the half-wing 3, 8, 9 in that:
- the leading edge 55‴ of the root portion 50‴ extends for a greater length than the corresponding trailing edge 5 6' , , ;
- the root portion 50‴ also includes an edge 57‴ placed behind the leading edge 55"', in front of the trailing edge 56‴, and on the opposite side of the trailing edge 56‴ with respect to the fuselage 2, with reference to the first "airplane" configuration; and
- the wing area 61‴ includes an edge 95‴ placed in front of the trailing edge 65‴ and abutting against the edge 57‴ of the root portion 50‴, with reference to the first "airplane" configuration.

The operation of the half-wing 3‴ is similar to that of the half-wing 3 and is not, therefore, described in detail.

The advantages afforded by the half-wing 3, 3', 3", 3‴; 8, 8', 8'', 8‴; 9, 9', 9'', 9‴ according to this invention are apparent from an examination of the characteristics thereof.

In particular, the wing area 60 defining the free wing tip 52 is operationally connected to the portion 51 and to the rotor 20a, 20b; 21a, 21b; 22a, 22b so as to be tiltable about the axis H; L; J, and generates an aerodynamic control force having a modulus and direction dependent on the relative angle α of inclination with respect to the direction parallel to the axis Y.

It is thus possible, unlike the solutions known and described in the introduction to this patent application, to use the same actuator 93 for both:
- adjusting the direction of thrust T1, T2; T3, T4; T5, T6 generated by the rotors 20a, 20b; 21a, 21b; 22a, 22b and then putting the aircraft 1 in the first "airplane" configuration, in the second "helicopter" configuration, or determining the transition between the above-mentioned first "airplane" configuration and second "helicopter" configuration; and
- tilting the wing area 60 by a desired angle α with respect to the direction parallel to the axis Y and generating a resulting aerodynamic control force on the aircraft 1, in the first "airplane" configuration.

This reduces the number of components of the aircraft 1, while ensuring complete and effective manoeuvrability in all flight conditions.

At the same time, the interference of the half-wings 3, 3', 3'', 3‴; 8, 8', 8'', 8‴; 9, 9', 9", 9‴ with the downward blowing generated by the rotors 20a, 20b, 21a, 21b, 22a, 22b, when the aircraft 1 is in the second "helicopter" configuration, is reduced.

Unlike the known solutions described in the introduction to this description, the aircraft 1 does not require movable control surfaces that can be independently operated by the rotors 20a, 20b (21a, 21b; 22a, 22b) and interposed between the root portion 50 and the corresponding nacelle 40a, 40b along the extension direction of the half-wing 3, 3', 3", 3‴; 8, 8', 8'', 8‴; 9, 9', 9'', 9‴.

It is thus possible to bring the nacelles 40a, 40b and the rotors 20b (21a, 21b; 22a, 22b) closer to the fuselage 2, increasing the compactness of the aircraft 1.

Due to the fact that the wing areas 61 are arranged at the wing tips 52 of respective half-wings 3, 3', 3", 3‴; 8, 8', 8'', 8‴; 9, 9', 9'', 9‴, the moments generated by them about the axis Y are particularly high even for small angles of inclination of the half-wings 3, 3', 3", 3‴; 8, 8', 8'', 8‴; 9, 9', 9'', 9‴ with respect to the axis Y.

Thus, it is possible to control the aircraft 1 in the first "airplane" configuration particularly effectively, even with reduced angles of inclination of the wing tip portion 51.

The wing tip portion 51 comprises the wing areas 60, 61 and the rotor 20a, 20b (21a, 21b, 22a, 22b). Thanks to this, the portion 51 defines a modulus that can be applied to both the half-wings 3, 3', 3", 3‴ and the aerodynamic areas 8, 8', 8'', 8‴; 9, 9', 9'', 9‴.

The leading edge 62 of half-wing 3, 8, 9 is crossed by the axis H (L, J) when the aircraft 1 is in the first "airplane" configuration.

As a result, the moment of inertia of the wing area 60 with respect to the above-mentioned axis H (L, J) is reduced, making it possible to reduce the actuation loads required to move the wing area 60 and, consequently, the stiffness and weight of the actuator 92.

This reduction in the moment of inertia is even more pronounced for the half-wing 3‴, 8‴, 9‴ as the actuator 93‴ is fixed in the rotationally fixed root portion 50 with respect to the axis H; L; J.

The wing area 60 of the half-wing 3', 8', 9' is connected to the wing area 61 and to the nacelle 40a, 40b, so that the inclination of the wing area 61 (and of the nacelle 40a, 40b) by the angle α about the axis H determines the inclination of the wing area 60 about the same axis H by an angle β different from the angle α.

It is thus possible to reduce the aerodynamic resistance of the wing area 60 when converting the aircraft 1 between the first "airplane" configuration and the second "helicopter" configuration.

The chord 66 lengths of each wing area 60 progressively increase from a minimum value to a maximum value, proceeding from the corresponding wing tip 52 towards the corresponding wing tip 80.

Accordingly, when the aircraft 1 is in the second "helicopter" configuration, each wing area 60 exposes its leading edge 62, tapered with respect to the axis Z, to the blowing generated by the corresponding rotor 20a, 20b; 21a, 21b; 22a, 22b, thereby reducing the interference with this blowing.

It is clear that changes and variations may be made to the half-wing 3, 3' , 3", 3‴; 8, 8' , 8", 8‴; 9, 9' , 9", 9‴ described and illustrated herein, without, for this reason, departing from the scope of protection defined by the claims.

In particular, the aircraft 1 could be a convertiplane comprising:
- just the half-wings 3' and the corresponding rotors 20a, 20b having respective axes B, C that can be tilted about the axis H by the same angles α;
- a propulsion unit designed to determine the simultaneous inclination of the rotors 20a, 20b about the axis H; and
- a pair of wing areas 61 that can be tilted about the axis H by the same angles β, which are different to the angles α.

Some of the half-wings 3, 3', 3'', 3‴; 8, 8', 8'', 8‴; 9, 9', 9", 9‴ may lack the corresponding wing areas 60.

In this case, the aircraft 1 would comprise only one or two pairs of half-wings 3, 3', 3'', 3‴, 8, 8', 8'', 8‴; 9, 9', 9", 9‴ with corresponding wing areas 61.

The aircraft 1 could, moreover, comprise just one or two pairs of rotors 20a, 20b; 21a, 21b; 22a, 22b that can be tilted about the corresponding axes H; L; J and one or two pairs of rotors 20a, 20b; 21a, 21b; 22a, 22b fixed with respect to the corresponding axes H; L; J.

The aircraft 1 may not include the half-wings 9, 9', 9", 9‴. In this case, the rotors 21a, 21b would be supported by respective pylons projecting, cantilevered, at the front from respective wing tip portions 50 of corresponding half-wings 3, 3', 3", 3‴.

The chord 66 lengths of each wing area 60 could be constant. In that case, the wing areas 60 would not be tapered.

## Claims

1. A half-wing (3, 3', 3'', 3‴; 8, 8', 8'', 8‴; 9, 9', 9", 9‴) for a convertible aircraft (1) capable of hovering, comprising:
- a first portion (50) that can be attached to a fuselage (2) of said aircraft (1);
- a second portion (51) that can be tilted with respect to the first portion (50) around a first axis (H; I; J);
- a first rotor (20a, 20b; 21a, 21b; 22a, 22b) integral with said second portion (51) and revolving about a second axis (B, C; D, E; F, G) transverse to said first axis (H; L; J) ;
said second portion (51) being tiltable with respect to said first portion (50) by a first angle (α) between a first and a second position associated, in use, with a first forward flight configuration and a second take-off/landing configuration, respectively, of said aircraft (1);
**characterised in that** it comprises a wing area (60) defining a free wing tip (52) of the half-wing (3) and operationally connected to said second portion (51);
each said first rotor (20a, 20b; 21a, 21b; 22a, 22b) being interposed between said first wing area (60) and said first portion (50) along said first axis (H; L; J).

2. The half-wing according to claim 1, **characterised in that** the second portion (51) can be tilted integrally with said first wing area (60) about said first axis (H; L; J) so as to assume a plurality of third positions associated with respective values of an aerodynamic control force generated, in use, by said wing area (60).

3. The half-wing according to claim 1, **characterised in that** said first wing area (60) is operationally connected to said second portion (51), so that the tilting of said second portion (51) by said first angle (α) around said first axis (H; L; J) determines the tilting of said first wing area (60) by a second angle (β) different from said first angle (α) around said first axis (H; L; J).

4. The half-wing according to any one of the preceding claims, **characterised in that** said second portion (51) further comprises a second wing area (61) interposed between said first rotor (20a, 20b; 21a, 21b; 22a, 22b) and said first portion (50), with reference along said first axis (H; L; J).

5. The half-wing according to claim 4, **characterised in that** said first wing area (60) has a first chord (66) having a first maximum length, and **in that** said second wing area (61) has a second chord (67) having a second length greater than said first minimum length.

6. The half-wing according to any one of the preceding claims, **characterised in that** said first wing area (61) comprises a leading edge (62) and a trailing edge (64) opposite to each other, with reference to said first configuration of said half-wing (3, 3', 3", 3‴; 8, 8', 8'', 8‴; 9, 9', 9'', 9‴).

7. The half-wing according to claim 6, **characterised in that** said leading edge (62) is traversed by said first axis (H; L; J) in said first configuration; or **in that** said leading edge (62) is arranged behind said first axis (H; L; J) in said first configuration.

8. The half-wing according to any of the preceding claims, **characterised in that** it also comprises:
- a nacelle (40a, 40b) interposed between said first wing area (60) and said second portion (51) along an extension direction of the half-wing (3) and supporting said first rotor (20a, 20b; 21a, 21b; 22a, 22b); and
- at least one first motor (30a, 30b; 31a, 31b; 32a, 32b) operationally connected to said first rotor (20a, 20b; 21a, 21b; 22a, 22b) and supported by said nacelle (40a, 40b).

9. The half-wing according to any one of the preceding claims, **characterised in that** it comprises a handling device (90) that can be operated to determine the tilt of said second portion (51) with respect to said first portion (50) about said first axis (H; I; J);
said handling device (90) also comprising:
- a rod (92) extending along said first axis (H; L; J); and
- an actuator (93) that can be operated to exert a torque on said rod (92) having a main component along the first axis (H; L; J).

10. The half-wing according to claim 9, **characterised in that** said rod (92) revolves about said first axis (H; L; J) and is attached to said second portion (51); said actuator (92) being fixed to said first portion (50).

11. The half-wing according to claim 9, **characterised in that** said rod (92) is rotationally attached with respect to said first axis (H; L; J) and is attached to said first portion (50); said actuator (92) being attached to said second portion (51).

12. An aircraft (1) capable of hovering, comprising:
- said fuselage (2) extending along a third axis (Y) transverse to said first axis (H; I; J); and
- a pair of half-wings (3, 3', 3'', 3‴; 8, 8', 8'', 8‴; 9, 9', 9", 9‴) according to any previous claim;
said aircraft (1) being selectively movable between:
- said first forward flight configuration in which said second axis (B, C; D, E; F, G) is arranged parallel to said third axis (Y); and
- said second take-off/landing configuration in which said second axis (B, C; D, E; F, G) is arranged transverse to said first axis (H; L; J) and third axis (Y).

13. The aircraft according to claim 12, **characterised in that** it comprises:
- a pair of said first rotors (20a, 20b) arranged on corresponding opposite sides with respect to said fuselage (2); and
- at least two pairs of second rotors (21a, 21b; 22a, 22b) also arranged on corresponding opposite sides with respect to said fuselage (2);
said aircraft (1) further comprising a pair of first electric motors (30a, 30b) and two pairs of second electric motors (31a, 31b; 32a, 32b) operationally connected to respective said first rotors (20a, 20b) and said pairs of said second rotors (21a, 21b; 22a, 22b) and able to be operated independently of each other so as to generate, respectively, a first and a second thrust value (T1, T2) and a third, fourth, fifth and sixth (T3, T4; T5, T6) thrust value independently of each other.

14. The aircraft according to claim 12 or 13, when dependent on claim 6, **characterised in that** said first axes (B, C; D, E; F, G) of said first rotors (20a, 20b; 21a, 21b; 22a, 22b) are arranged parallel to a fourth axis (Z) of said aircraft (1) in said second configuration of the aircraft (1) ;
said fourth axis (Z) being orthogonal to said third axis (Y) and first axis (H; L; J);
said leading edge (62) being tapered with respect to said fourth axis (Z) proceeding from said free wing tip (52) towards said fuselage (2) in said second configuration.

15. The aircraft according to claim 12, when dependent on claim 3, **characterised in that** it is a convertiplane comprising:
- a single pair of half-wings (3');
- a single pair of said first rotors (20a, 20b) having respective second axes (B, C) that can be tilted about said first axis (H); and
- a propulsion unit simultaneously driving both said first rotors (20a, 20b) so as to make them rotate around the respective said second axes (B, C);
said first wing areas (60) being tiltable about said first axis (H) independently of said first rotors (20a, 20b).

## Amended claims

### Amended claims in accordance with Rule 137(2) EPC.

1. A half-wing (3'; 8'; 9') for a convertible aircraft (1) capable of hovering, comprising:
- a first portion (50) that can be attached to a fuselage (2) of said aircraft (1);
- a second portion (51) that can be tilted with respect to the first portion (50) around a first axis (H; L; J);
- a first rotor (20a, 20b; 21a, 21b; 22a, 22b) integral with said second portion (51) and revolving about a second axis (B, C; D, E; F, G) transverse to said first axis (H; L; J);
said second portion (51) being tiltable with respect to said first portion (50) by a first angle (α) between a first and a second position associated, in use, with a first forward flight configuration and a second take-off/landing configuration, respectively, of said aircraft (1);
said half-wing (3'; 8'; 9') further comprising a first wing area (60) defining a free wing tip (52) of the half-wing (3) and operationally connected to said second portion (51);
each said first rotor (20a, 20b; 21a, 21b; 22a, 22b) being interposed between said first wing area (60) and said first portion (50) along said first axis (H; L; J);
**characterised in that** said first wing area (60) is operationally connected to said second portion (51), so that the tilting of said second portion (51) by said first angle (α) around said first axis (H; L; J) determines the tilting of said first wing area (60) by a second angle (β) different from said first angle (α) around said first axis (H; L; J).

2. The half-wing according to claim 1, **characterised in that** the second portion (51) can be tilted integrally with said first wing area (60) about said first axis (H; L; J) so as to assume a plurality of third positions associated with respective values of an aerodynamic control force generated, in use, by said wing area (60).

3. The half-wing according to claim 1 or 2, **characterised in that** said second portion (51) further comprises a second wing area (61) interposed between said first rotor (20a, 20b; 21a, 21b; 22a, 22b) and said first portion (50), with reference along said first axis (H; L; J).

4. The half-wing according to claim 3, **characterised in that** said first wing area (60) has a first chord (66) having a first maximum length, and **in that** said second wing area (61) has a second chord (67) having a second length greater than said first maximum length.

5. The half-wing according to any one of the preceding claims, **characterised in that** said first wing area (60) comprises a leading edge (62) and a trailing edge (64) opposite to each other, with reference to said first configuration of said half-wing (3'; 8'; 9').

6. The half-wing according to claim 5, **characterised in that** said leading edge (62) is traversed by said first axis (H; L; J) in said first configuration; or **in that** said leading edge (62) is arranged behind said first axis (H; L; J) in said first configuration.

7. The half-wing according to any of the preceding claims, **characterised in that** it also comprises:
- a nacelle (40a, 40b) interposed between said first wing area (60) and said second portion (51) along an extension direction of the half-wing (3) and supporting said first rotor (20a, 20b; 21a, 21b; 22a, 22b); and
- at least one first motor (30a, 30b; 31a, 31b; 32a, 32b) operationally connected to said first rotor (20a, 20b; 21a, 21b; 22a, 22b) and supported by said nacelle (40a, 40b).

8. The half-wing according to any one of the preceding claims, **characterised in that** it comprises a handling device (90) that can be operated to determine the tilt of said second portion (51) with respect to said first portion (50) about said first axis (H; L; J);
said handling device (90) also comprising:
- a rod (92) extending along said first axis (H; L; J); and
- an actuator (93) that can be operated to exert a torque on said rod (92) having a main component along the first axis (H; L; J).

9. The half-wing according to claim 8, **characterised in that** said rod (92) revolves about said first axis (H; L; J) and is attached to said second portion (51); said actuator (92) being fixed to said first portion (50).

10. The half-wing according to claim 9, **characterised in that** said rod (92) is rotationally attached with respect to said first axis (H; L; J) and is attached to said first portion (50); said actuator (92) being attached to said second portion (51).

11. An aircraft (1) capable of hovering, comprising:
- said fuselage (2) extending along a third axis (Y) transverse to said first axis (H; L; J); and
- a pair of half-wings (3'; 8'; 9') according to any previous claim;
said aircraft (1) being selectively movable between:
- said first forward flight configuration in which said second axis (B, C; D, E; F, G) is arranged parallel to said third axis (Y); and
- said second take-off/landing configuration in which said second axis (B, C; D, E; F, G) is arranged transverse to said first axis (H; L; J) and third axis (Y).

12. The aircraft according to claim 11, **characterised in that** it comprises:
- a pair of said first rotors (20a, 20b) arranged on corresponding opposite sides with respect to said fuselage (2); and
- at least two pairs of second rotors (21a, 21b; 22a, 22b) also arranged on corresponding opposite sides with respect to said fuselage (2);
said aircraft (1) further comprising a pair of first electric motors (30a, 30b) and two pairs of second electric motors (31a, 31b; 32a, 32b) operationally connected to respective said first rotors (20a, 20b) and said pairs of said second rotors (21a, 21b; 22a, 22b) and able to be operated independently of each other so as to generate, respectively, a first and a second thrust value (T1, T2) and a third, fourth, fifth and sixth (T3, T4; T5, T6) thrust value independently of each other.

13. The aircraft according to claim 11 or 12, when dependent on claim 5, **characterised in that** said first axes (B, C; D, E; F, G) of said first rotors (20a, 20b; 21a, 21b; 22a, 22b) are arranged parallel to a fourth axis (Z) of said aircraft (1) in said second configuration of the aircraft (1);
said fourth axis (Z) being orthogonal to said third axis (Y) and first axis (H; L; J);
said leading edge (62) being tapered with respect to said fourth axis (Z) proceeding from said free wing tip (52) towards said fuselage (2) in said second configuration.

14. The aircraft according to claim 13, **characterised in that** it is a convertiplane comprising:
- a single pair of half-wings (3');
- a single pair of said first rotors (20a, 20b) having respective second axes (B, C) that can be tilted about said first axis (H); and
- a propulsion unit simultaneously driving both said first rotors (20a, 20b) so as to make them rotate around the respective said second axes (B, C);
said first wing areas (60) being tiltable about said first axis (H) independently of said first rotors (20a, 20b).
